(19) Europäisches Patentamt

European Patent Office

Office européen des brevets

(11) **EP 1 184 092 B1**

(12) **EUROPÄISCHE PATENTSCHRIFT**

(45) Veröffentlichungstag und Bekanntmachung des Hinweises auf die Patenterteilung:
**01.12.2004  Patentblatt 2004/49**

(51) Int Cl.⁷: **B09B 1/00**

(21) Anmeldenummer: **00120249.8**

(22) Anmeldetag: **27.09.2000**

(54) **Verfahren zum Verhindern des Eindringens einer Salzlösung in einen Hohlraum einer Salzlagerstätte**

Method for preventing penetration of a salt solution into the cavity of a salt deposit

Procédé pour empécher la pénétration d' une solution saline dans la cavité d' un gisement de sel

(84) Benannte Vertragsstaaten:
**AT BE CH CY DE DK ES FI FR GB GR IE IT LI LU MC NL PT SE**

(30) Priorität: **30.08.2000  DE 10042860**

(43) Veröffentlichungstag der Anmeldung:
**06.03.2002  Patentblatt 2002/10**

(73) Patentinhaber: **GESELLSCHAFT FÜR ANLAGEN- UND REAKTORSICHERHEIT ( GRS) mbH D-50667 Köln (DE)**

(72) Erfinder: **Sander, Wolfgang 38159 Vechelde (DE)**

(74) Vertreter: **Hoffmann, Eckart, Dipl.-Ing. Patentanwalt, Bahnhofstrasse 103 82166 Gräfelfing (DE)**

(56) Entgegenhaltungen:
**DE-A- 3 141 884          DE-A- 3 438 127
DE-A- 3 539 474**

**Beschreibung**

Die vorliegende Erfindung betrifft ein Verfahren gemäß dem Oberbegriff des Anspruchs 1.

Für untertägige Schadstoffdeponien und radioaktive Endlager in einer Salzlagerstätte sind zur Stabilisierung des Deckgebirges und zur Volumenreduzierung vor der Stillegung Verfüllungsmaßnahmen der untertägigen Hohlräume mittels Versatzstoffen bekannt. Für die Bewertung der eingesetzten Versatzstoffe werden vor allem gebirgsmechanische Kriterien verwendet. Ein abdichtendes Verhalten wird nur durch das konvergenzbedingte Verdichten der Versatzstoffe im Laufe mehrerer Jahrhunderte erreicht. Innerhalb der gebirgsmechanisch aktiven Phase kann daher ein Zutritt von Salzlösungen nicht verhindert werden, obwohl er gerade da am wahrscheinlichsten ist. Die Zusammensetzung derartiger Salzlösungen (nachfolgend kurz als Lösungen bezeichnet) hängt u.a. von dem chemischen Milieu, in dem die betreffende Lösung vorliegt, und den Milieus ab, die solche Lösungen im Laufe ihrer Bewegung durch das Gebirge durchlaufen haben. Es können daher verschiedenste Lösungen, von ungesättigten bis zu Gleichgewichtslösungen zu den verschiedensten Mineralien, vorliegen.

Diese Lösungen können durch die relativ permeablen Versatzstoffe bis zu den Schadstoffen in dem Deponieraum vordringen, diese auslaugen und samt ihrem Schadstoffinhalt von der Gebirgskonvergenz ausgepreßt werden. Ein solcher Deponieraum ist - abhängig von der Lokalität und dem Einsatzzweck - beispielsweise eine Strecke, ein Schacht, eine Kammer oder ein Bohrloch.

Um diesen Schadstofftransport weitestgehend zu verhindern, werden insbesondere für Endlager radioaktiver Abfälle aufwendige und entsprechend teure Dammbauwerke aus hydraulisch abbindenden Stoffen wie beispielsweise Beton vorgesehen. Diese haben jedoch den Nachteil, daß sie bei einmaligem Versagen ihre Wirkung verlieren. Ursachen, die zum Versagen führen können, sind z.B. nicht vorhandener Kraftschluß zum Gebirge, Schrumpfung, spannungsbedingte Rißbildung, Permeabilitätserhöhung durch thermodynamisch nicht stabile Baustoffe und nicht ortsstabile Dichtungsmaterialien.

Eine Lösung kann auch bei Kali- und Steinsalzgruben ohne Beteiligung eines Schadstoffs zu Problemen führen. Beispielsweise kann die eindringende Lösung Löseerscheinungen in der Grube hervorrufen und deren geologische Stabilität gefährden.

Ein Verfahren gemäß dem Oberbegriff des Patentanspruchs 1 ist aus der DE 35 39 474 A1 bekannt. Bei diesem bekannten werden als Reaktanden Magnesiumoxid (MgO) und/oder Calciumoxid (CaO) als Gemenge mit Salzgrus und/oder Ton benutzt, um einen Raum in einem Salzstock aufzufüllen und bei anschließendem Zutritt von Sole abzudichten. Aus dem Magnesium- und Calciumoxid entsteht durch Wasseraufnahme Magnesium- und Calciumhydroxid mit höherem Volumen und entsprechender Dichtwirkung. Die resultierenden Hydroxide können zwar kurzfristig abdichten, reagieren aber auf lange Sicht mit den sulfathaltigen Lösungen aus dem Salzgebirge weiter zu neuen stabilen Mineralen, die den Verschluss sprengen und die Dichtwirkung aufheben. Das sich bildende Calciumhydroxid ist nicht stabil bzw. inert, sondern reagiert mit dem Sulfat der natürlichen Salzlösungen im Salzgebirge kurzfristig zu Gips mit größerem Volumen. Ein weiterer entscheidender Nachteil der bekannten Materialkombination ist der Umstand, dass sie den pH-Wert der Lösung stark ins basische verschiebt, was zu einer extremen Erhöhung der Löslichkeit und damit der Mobilität aller Schwermetalle und Radionuklide führt, die ja gerade immobilisiert werden sollen.

Aus der DE 34 38 127 A1 ist ein Verfahren zur Selbstabdichtung eines Endlagers für Abfallbehälter in einem unterirdischen Hohlraum bekannt, bei dem die Abfallbehälter allseitig in den Hohlraum ausfüllendes Steinsalz eingebettet werden, wobei dem Steinsalz vorzugsweise pulverisiertes Anhydrit beigemengt wird. Dieser Stand der Technik ist allerdings nicht in der Lage die gewünschte Abdichtung herbeizuführen, wenn sich der abzudichtende Hohlraum in größerer Tiefe befindet. Zwar ist es richtig, das Anhydrit ($CaSO_4$) sein Volumen im Kontakt mit Wasser stark vergrößert und theoretisch zu einer Abdichtung führen könnte. Aus thermodynamischen Gründen kann ein solcher Prozess jedoch nicht in Bergwerken in größerer Tiefe ablaufen. Die Hydratisierung von Anhydrit, sprich die Umwandlung von Anhydrit in Gips ($CaSO_4*2H_2O$), kann zwar auf jeder Salzhalde beobachtet werden, läuft aber nur bei den relativ niedrigen Temperaturen an der Tagesoberfläche ab. In den tiefen Bergwerken, wo die Endlagerung radioaktiver Abfälle und die Ablagerung chemisch-toxischer Abfälle vorgenommen werden soll und die entsprechend abgedichtet werden müssen, herrschen aber höhere Temperaturen. Bei diesen Temperaturen ist Anhydrit aber stabil, und es gibt für den eingebrachten Anhydrit keinen Grund sich in Gips umzuwandeln und eine Dichtwirkung hervorzurufen.

Aus der DE 31 41 884 A1 ist ein Verfahren zur Endlagerung von pumpfähigen Abfallstoffen bekannt. Dabei werden z. T. ähnliche arteigene Materialien wie auch bei der vorliegenden Erfindung eingesetzt, die allerdings an der Oberfläche zu pumpfähigen Gemische durch Anrühren mit Wasser oder Salzlösung verarbeitet werden, die dann in die untertägigen Hohlräume gepumpt werden. Dort härten diese aus, haben aber nachweislich keine Dichtwirkung, weil die Volumenvergrößerung durch Hydratisierung bereits beim Anmischen anläuft und damit größtenteils schon abgelaufen, d.h. verpufft ist, bevor das Material am vorgesehenen Ort unter Tage ankommt. Dort gibt es nur eine Restquellung und Abbindung des zunächst zähflüssigen Gemisches. Das resultierende Produkt besteht zwar aus langzeitstabilen, arteigenen Materialien, aber es hat eine hohe Restporosität, d.h. hohe Permeabilität und damit keine Dichtwirkung.

Der Erfindung liegt daher die Aufgabe zugrunde, ein Verfahren zum dauerhaften Verhindern des Eindringens einer Salzlösung in einen Hohlraum einer Salzlagerstätte zu schaffen.

Diese Aufgabe wird mit einem Verfahren gemäß Anspruch 1 gelöst. Vorteilhafte Weiterbildungen der Erfindung sind Gegenstand der Unteransprüche.

Das erfindungsgemäße Verfahren eignet sich insbesondere zum Einschließen von Schadstoff in einem Deponieraum einer Salzlagerstätte unter völliger oder weitestgehender Verhinderung des Zutritts von Lösungen zum Schadstoff und damit einer Migration des Schadstoffs. Da mit diesem Verfahren aber nicht nur die Migration von Schadstoffen, sondern allgemein von Lösungen verhindert werden kann, eignet sich das Verfahren ganz allgemein zur Abdämmung von Lösungszuflüssen zu Hohlräumen in Salzlagerstätten. So kann mit diesem Verfahren beispielsweise ein Lösungszufluß zu einer Kali- und Steinsalzgrube sowie artverwandten untertägigen Hohlräumen gesteuert, verringert oder verhindert werden. Dabei kann, je nach lokalen Gegebenheiten, der Zuflußbereich direkt in erfindungsgemäßer Weise verfüllt und abgedämmt werden. Aber auch durch Verfüllung geeigneter Zugänge zu besonders zu schützenden Grubenteilen können letztere vor den Auswirkungen einer durch Lösungszufluß hervorgerufenen Flutung geschützt werden. Schutzwürdig sind z.B. Bereiche, in denen es durch Löseerscheinungen zu einer Beeinträchtigung der geologischen Barriere kommen kann. Auch die Abschirmung von aufgeschlossenen besonders gefährdeten geologischen Horizonten durch gezielte Einbringung von Versatzmaterial direkt im Bereich des Aufschlusses ist möglich. Die Einbringung kann präventiv erfolgen oder zur Abwehr von bereits erfolgendem Zufluß eingesetzt werden.

Durch Verfüllung von unerwünschten Fließwegen läßt sich der Flutungsvorgang steuern, so daß z.B. die Fließwege und die Reihenfolge der gefluteten Feldesteile bestimmt werden können. Damit kann die Standfestigkeit der Grubenbaue in Bereichen mit leicht löslichen Salzen während und nach der Flutung verbessert werden.

Da die Durchführung des erfindungsgemäßen Verfahrens in seiner allgemeinsten Form und die dabei erzielten Wirkungen im wesentlichen unabhängig davon sind, ob in einem abzudichtenden Hohlraum Schadstoff gelagert ist oder nicht, gilt die nachfolgende, sich mit der bevorzugten Anwendung des Verfahrens zur Verhinderung einer Schadstoffmigration befassende Beschreibung für die allgemeinere Anwendung der Erfindung in praktisch gleicher Weise.

In der genannten bevorzugten Anwendung besteht das Verfahren der Erfindung im wesentlichen darin, die Öffnung oder die Öffnungen des den Schadstoff enthaltenden Deponieraums mit trockenem, d.h. kristallwasserarmem oder kristallwasserfreiem, reaktivem Versatzmaterial zu füllen. Das Versatzmaterial kann aus einem reinen Stoff oder einem Stoffgemenge, welches auch Abfall- oder Reststoffe enthalten kann, bestehen, wobei sowohl natürliche als auch behandelte natürliche Stoffe verwendet werden können. Dieses reaktive Versatzmaterial ist im Gegensatz zu den eingangs genannten Versatzstoffen, die nicht-reaktiv sind, so beschaffen, daß es bei Zutritt einer Lösung durch Mineralum- bzw. -neubildung unter Volumenzunahme reagiert, wobei pro Volumeneinheit des Versatzmaterials der in ihm nach dem Einbringen und vor der Reaktion verbliebene Porenraum kleiner als die maximal hervorrufbare Volumenzunahme ist. Die erzeugte Volumenzunahme entspricht einer Vergrößerung des Feststoffvolumens und führt zur Bildung eines flüssigkeitsdichten Verschlußstopfens in der aufgefüllten Öffnung. Der im Versatzmaterial vorhandene Porenraum wird also so verschlossen, daß ein weiteres Vordringen der Lösung und der darin eventuell enthaltenen Schadstoffe stark verringert bzw. verhindert wird. Der Verschlußstopfen ist langzeitstabil, da er im Gleichgewicht mit dem in seiner Umgebung herrschenden chemischen Milieu ist. Außerdem ist seine Dichtwirkung unabhängig von der Zuflußrichtung, so daß sowohl eindringende als auch ausgepreßte Lösungen am weiteren Migrieren gehindert werden. Durch die gleichzeitige chemische Bindung des Wassers entsteht in der Reaktionszone ein kompakter Stopfen aus trockenem Material, in dem auch eventuell vorhandene Schadstoffe fixiert werden.

Das Versatzmaterial kann außer in die Öffnung(en) allein oder in Verbindung mit einem oder mehreren anderen, inerten Versatzstoffen oder ebenfalls reaktivem Versatzmaterial trocken in den untertägigen Deponieraum selbst eingebracht werden.

Gemäß dieser Erfindung braucht kein dichter Verschlußkörper eingebracht werden, da das erfindungsgemäße Versatzmaterial seine abdichtende Wirkung durch chemische Reaktion mit Bestandteilen der zutretenden Lösung und durch Mineralneu- bzw. -umbildung automatisch dann erreicht, wenn eine Abdichtung auch tatsächlich erforderlich ist, d.h. eine Lösung zufließt. Der Vorteil liegt darin, daß hierbei die Einbringtechnik - beispielsweise Verwendung von Versatzblasmaschinen oder Schütten - einfacher und billiger ist und kein Dammbauwerk angefertigt zu werden braucht. Ein weiterer Vorteil besteht darin, daß das Versatzmaterial bis zum Lösungszutritt gasdurchlässig ist. Somit kann in dem Deponieraum enthaltene Luft bei dessen konvergenzbedingter Verkleinerung leicht entweichen; dasselbe gilt für Gase, die von den Schadstoffen gebildet werden.

Die durch die Reaktion mit zugetretener Lösung neugebildeten Minerale sind dieser gegenüber stabil. Die Reaktion kann soweit gehen, daß dort, wo die Lösungsfront am weitesten vorgedrungen ist, sämtliche Lösungsbestandteile, einschließlich eventuell vorhandener Schadstoffe und des Wassers der Lösung, in festen Mineralen fixiert werden. Dadurch wird ein räumlich begrenzter, aber sehr dichter Stopfen mit dem Versatzmaterial bzw. eines Teiles desselben gebildet, der aufgrund des Kristallisationsdrucks auch einen schnellen Kraftschluß zum Gebirge erreicht. Die Volumenvergrößerung der Feststoffe bewirkt nicht nur einen Druckaufbau, sondern führt auch zu einer starken Reduzierung der Permeabilität des Versatzmaterials.

Solange die Permeabilität noch groß genug ist, um die Migration von Lösung zuzulassen, läuft auch die Mineralneu- bzw. -umbildungsreaktion ab. Dies führt zu weiterer Verringerung der Permeabilität, bis schließlich die Migration der Lösung gestoppt wird, d.h. sich ein Verschlußstopfen gebildet hat. Wird die Integrität dieses Stopfens, z. B. durch gebirgsmechanische Vorgänge, wie Rißbildung, Erhöhung des hydrostatischen Drucks etc., gestört und kommt es dadurch zu einer erneuten Lösungsmigration, so trifft die Lösung abermals auf reaktives Versatzmaterial, was wiederum zur Bildung eines dichten Stopfens führt. Das heißt in anderen Worten, es tritt eine Selbstverheilung des Stopfens ein.

Wenn das Versatzmaterial vorkompaktiert eingebracht wird, beispielsweise in Form von brikettartigen Quadern, sind die Porosität und damit die Permeabilität des Versatzmaterials sowie der bei Zutreten einer Lösung hervorgerufene Kristallisationsdruck im Vergleich zu lose geschüttetem Versatzmaterial genauer einstellbar. Der Kristallisationsdruck darf nicht zu hoch werden, damit keine Spannungsrisse entstehen. Außerdem kann durch das vorkompaktierte Einbringen die Handhabung beim Einbringvorgang verbessert werden.

Die mit Versatzmaterial gefüllte Öffnung kann mit Lösung kontrolliert, d.h. unter menschlicher Einwirkung, geflutet werden. Dadurch kann die Bildung des flüssigkeitsdichten Verschlußstopfens gezielt herbeigeführt werden. Dies ist insbesondere bei Verfüllarbeiten vorteilhaft, bei denen unterschiedliche Teilbereiche oder Kammern während des Betriebs gegeneinander abgeschlossen werden bzw. bleiben sollen.

In der Regel wird davon ausgegangen, daß Lösungen nur durch die Öffnung bzw. die Öffnungen in den Deponieraum gelangen können. Es ist jedoch denkbar, daß Lösungen auch aus anderen Richtungen in den Deponieraum gelangen, beispielsweise durch Risse oder Klüfte, die durch gebirgsmechanische Vorgänge erst nach Einlagerung der Schadstoffe in den Deponieraum entstanden sind. Um sicherzustellen, daß die Schadstoffe auch in diesem Fall sicher eingeschlossen bleiben, ist es zweckmäßig, das Versatzmaterial so anzuordnen, daß es nicht nur die Öffnung(en) füllt, sondern zusätzlich den Schadstoff ganz oder teilweise umschließt.

Das Vorsehen von Abschnitten von Versatzmaterial unterschiedlicher Zusammensetzung, d.h. eine räumlich gestaffelte Zusammensetzung, ermöglicht es, beispielsweise die Geschwindigkeit des Umformprozesses und eine gewünschte Struktur des gebildeten Stopfens vorzuwählen.

Es sei angenommen, daß eine Lösung auf eine Versatzmaterialschicht bestimmter Dicke trifft. Falls die Lösung das Versatzmaterial schneller durchläuft, als sich ein dichter Stopfen bilden kann, wird in solchem Fall Lösung zum Schadstoff gelangen. Um dies zu vermeiden, kann selbstverständlich die Dicke der Versatzmaterialschicht von vornherein ausreichend groß gewählt werden. Eine vorteilhafte Alternative hierzu besteht darin, den Deponieraum auf der Seite des erwarteten Zutritts der Lösung mit einer Strömungsbarriere zu versehen, deren Permeabilität gering ist. Die Strömungsbarriere reduziert die Geschwindigkeit der sie durchlaufenden Lösung. Dadurch wird ein schneller Zufluß von Lösung zum Versatzmaterial selbst verhindert und dessen Wirksamkeit selbst bei relativ geringer Schichtdicke auch bei schnellem Zufluß von Lösung zur Strömungsbarriere sichergestellt. Beispiele für eine solche Strömungsbarriere sind Sand-, Ton- und Zementschüttungen sowie Magerbeton und Mauerwerk.

Weitere Vorteile, Merkmale und Besonderheiten der Erfindung ergeben sich aus der nachfolgenden Beschreibung bevorzugter, jedoch nicht beschränkender Ausführungsbeispiele der Erfindung.

Zur besseren Übersichtlichkeit sind im Anhang die wichtigsten der nachstehend erwähnten Minerale und Gesteine zusammengefaßt.

Die für das erfindungsgemäße Verfahren eingesetzten Versatzmaterialien bilden nach Reaktion mit einer Lösung stabile Reaktionsprodukte gegenüber der am Versatzmaterial anstehenden Lösung. Dabei nutzt die Erfindung im wesentlichen folgende Reaktionstypen:

$$H_2O \text{ der Lösung + Versatzmaterial} \rightarrow \text{hydratisiertes Salz}$$

$$\text{gelöstes Ion der Lösung + Versatzmaterial} \rightarrow \text{Doppelsalz}$$

$$H_2O \text{ der Lösung + gelöstes Ion der Lösung + Versatzmaterial} \rightarrow \text{hydratisiertes Doppelsalz}$$

Das erfindungsgemäße Verfahren nutzt die Volumenvergrößerung des Feststoffanteils eines trocken eingebrachten Versatzmaterials, die als Folge der Reaktion mit einer Lösung, welche in den Porenraum eindringt, erfolgt. Bei der Reaktion werden Salzhydrate, Doppelsalze oder höhere Salze gebildet. Da bei diesen Reaktionen Wasser der Lösung verbraucht wird, wird die Restlösung übersättigt und scheidet zusätzlich zu den Reaktionsprodukten aus den Versatzmaterialien die in der Lösung enthaltenen gelösten Salze, zum Teil mit erheblichen Kristallwasseranteilen, im Porenraum aus. Dies bewirkt eine immer weitere Reduzierung des lösungserfüllten Porenraums, was den Abdichtungsvorgang noch verstärkt. Die Reaktion kann soweit fortschreiten, daß es zu einem vollständigen Verbrauch der Lösung und damit zur vollständigen Verfestigung kommt. Damit wird eine Verhinderung der Migration beim Eindringen bzw. Auspressen von Lösungen im Untertagebereich einer Schadstoffdeponie oder eines Endlagers erzielt.

Nachfolgend werden die Stoffe beschrieben, die als Versatzmaterial zur Durchführung des erfindungsgemäßen Verfahrens eingesetzt werden. Hierfür vorgesehen sind der Einsatz von Anhydriden oder Entwässungsprodukten kristallwasserhaltiger natürlicher oder künstlicher Mineralsalze (auch Abfälle oder Reststoffe), gegebenenfalls mit Zusatz inerten Materials und/oder eines weiteren Reaktanden und/oder in räumlich gestaffelter Abfolge. Alle aufgeführten Versatzmaterialien sind einzeln oder in Kombinationen miteinander für alle Lösungen, die im Zusammenhang mit Untertagedeponien auftreten können, geeignet. Abhängig von den Reaktionseigenschaften des gewählten Versatzmaterials oder der gewählten Kombination aus Versatzmaterialien ist dann die Länge bzw. Dicke der Schicht aus Versatzmaterial zu wählen. Wie schon erwähnt, kann die zu wählende Dicke auch davon abhängen, ob zusätzliche Maßnahmen, etwa in Form einer oder mehrerer Strömungsbarrieren, vorgesehen sind.

Als natürliche Ausgangsstoffe werden z.B. natürliches Hartsalz, daraus gewonnener Kieserit, oder Carnallitit, Kainitit, aber auch $MgSO_4$-haltige Haldensalze, kieserithaltiger Abraum und Industriereststoffe, bei geeigneter Temperatur entwässert. Dabei entstehen verschiedene Entwässerungsprodukte. Das wichtigste Produkt ist $MgSO_4$ wasserfrei. Dies reagiert zusammen mit eventuell vorhandenen anderen Bestandteilen des Versatzmaterials mit dem Wasser der bei einem Störfall eindringenden Lösung unter Bildung von Magnesiumsulfathydraten (z.B. $MgSO_4*n\ H_2O$, $KCl*MgSO_4*2,75\ H_2O$, $K_2Mg(SO_4)_2*4\ H_2O$, $Na_2Mg(SO_4)_2*4\ H_2O$ usw.). Dadurch wird Wasser der Lösung verbraucht und das Volumen des Feststoffs erhöht. Die in der Lösung gelösten Salze werden dadurch übersättigt und zusätzlich als Feststoff, der zum Teil weitere erhebliche Wassermengen bindet, ausgeschieden. Bei vollständigem Verbrauch des Wassers der Lösung mit dem Versatzmaterial bildet sich ein trockenes Produkt.

Um Einfluß auf die ablaufenden Reaktionen hinsichtlich des neuen Feststoffvolumens und Reaktionsverlaufs zu nehmen, können dem Versatzmaterial weitere Salze beigemischt werden.

Als inertes Material werden vor allem Steinsalz als Haufwerk oder Haldensalz, aber auch industrielle Reststoffe oder Abfälle verwendet. Die Menge wird so gewählt, daß durch die Reaktion des Versatzmaterials mit der Lösung der Porenraum vollständig gefüllt wird und sich ein gewünschter Kristallisationsdruck gegen das Gebirge ausbilden kann. Dabei kann auch Einfluß auf die Korngrößenverteilung zur Optimierung der Einbaudichte genommen werden.

Durch den Einsatz weiterer reaktiver Zuschlagstoffe läßt sich die Reaktion zusätzlich steuern und optimieren, insbesondere im Hinblick auf die Stöchiometrie, die Vollständigkeit der Reaktion, den Phasenbestand, die Wasserbindung, den Kristallisationsdruck, die Volumenveränderung und das geochemische Milieu. Je nach Randbedingungen und Anforderungen kommen als weitere reaktive Stoffe, die auch in Gemengen vorkommen können, in Betracht: $KCl$, $MgSO_4$, $CaCl_2$, $Na_2SO_4$ und $K_2SO_4$. Dadurch läßt sich die Bildung z.B. folgender Minerale steuern: Kainit, Carnallit, Bischofit, Kieserit, Leonhardit, Pentahydrit, Hexahydrit, Epsomit, Schönit, Leonit, Blödit, D' Ansit, Syngenit, Glauberit und Polyhalit.

Im Normalfall wird das Versatzmaterial als reiner Stoff oder als homogenes Gemenge eingebracht. Als weitere Vorgehensweise zur Optimierung des Reaktionsablaufs, z.B. unter Berücksichtigung der geologischen Aufschlußverhältnisse, können in räumlich gestaffelter Einbringung verschiedene Materialien oder Materialgemische verwendet werden. Als Beispiel sei hier die Einbringung in zwei Abschnitten erläutert, von denen der erste vom Schadstoff abgewandt und der zweite dem Schadstoff zugewandt ist. In beiden Abschnitten sind Versatzmaterialien angeordnet, bei denen im Störfall bei Zutritt einer Lösung Mineralum- bzw. -neubildung auftritt. Dabei wird das Versatzmaterial im ersten Abschnitt so gewählt, daß es, sollte es von der Lösung durchdrungen werden, die Zusammensetzung der Lösung in bestimmter Weise verändert. Das Versatzmaterial des zweiten Abschnitts kann dann der zu erwartenden Lösungszusammensetzung angepaßt und so gewählt werden, daß es mit der beim Durchdringen des ersten Abschnitts veränderten Lösung optimal reagiert, um einen neuen Selbstverschluß zu bilden. Eine in dieser Weise optimierte Reaktion kann die erstrebte Abdichtung unter Verwendung billigerer Versatzmaterialien und/oder geringerer Mengen an Versatzmaterial ermöglichen, als es mit einem homogen eingebrachten Versatzmaterial der Fall ist.

Es ist im übrigen auch möglich, eine solche gestaffelte Anordnung wenigstens zweier Materialabschnitte vorzusehen, bei der nur der zweite Abschnitt Versatzmaterial enthält. Bei dem Material des ersten Abschnitts handelt es sich dagegen um einen Konditionierungsstoff, dessen Aufgabe nicht darin besteht, einen Verschlußstopfen zu bilden, sondern die Lösung im Hinblick auf eine optimale Reaktion mit dem entsprechend gewählten Versatzmaterial im zweiten Abschnitt in bestimmter Weise zu verändern bzw. zu konditionieren. Beispielsweise kann, bei einer Staffelung von $K_2SO_4$-haltigem Konditionierungsstoff und $CaSO_4$-haltigem Versatzmaterial, im Konditionierungsstoff die Lösung mit $K_2SO_4$ angereichert werden. Nachfolgend kann dann im Versatzmaterial mit dem $K_2SO_4$ und $CaSO_4$ Syngenit gebildet werden. Man kann auch entlang des Fließweges der Lösung leicht lösliche Salze wie z.B. $CaCl_2$ zur Verfügung stellen, so daß die daran angereicherte Lösung mit einem geeigneten Versatzmaterial zu Reaktionen führt, die durch lokale Volumenvergrößerung einen Verschluß bilden. Beispielsweise bildet sich beim Durchströmen von geeigneten Rauchgasreinigungsrückständen eine $CaCl_2$-reiche Lösung, die bei Kontakt mit sulfatreichem Versatzmaterial große Mengen Calciumsulfatminerale bildet, was zu einer Volumenvergrößerung des Feststoffanteils und zu einem Verbrauch des Wassers führt.

Zur Auswahl der für den jeweiligen Anwendungsfall optimierten Rezeptur des Versatzmaterials werden Gleichgewichts- und Volumenberechnungen durchgeführt. Mittels Tests mit dem ausgewählten Material kann dessen Tauglichkeit nachgewiesen werden. Die Auswahl erfolgt nach den räumlichen und geologischen Randbedingungen, den möglichen Zusammensetzungen von bei Störfällen zutretenden Lösungen, den materialspezifischen Volumenveränderungen, den geforderten Schutzzielen, den ermittelten Störfallszenarien, der Materialverfügbarkeit, der Einbringtechnik und den Kosten.

Als reaktive Versatzmaterialien zur Durchführung des erfindungsgemäßen Verfahrens sind z.B. zusammengefaßt die folgenden Stoffe zu nennen, die alleine oder als Gemenge eingesetzt werden können: $MgSO_4$, $K_2SO_4$, $Na_2SO_4$, $KCl$, $CaCl_2$, Kieserit, Hartsalz, Carnallitit und ähnliche Salze, Entwässerungsprodukte von Kieserit, Entwässerungsprodukte von Hartsalz, Entwässerungsprodukte von Kainitit, Entwässerungsprodukte von Carnallitit, mineralische Rückstände aus Verbrennungsprozessen und Rauchgasreinigung und mineralische Rückstände aus Produktionsprozessen, die einen oder mehrere der vorgenannten Stoffe bzw. ähnliche Stoffe enthalten.

Durch das erfindungsgemäße Verfahren werden sehr langzeitstabile Verschlüsse gebildet, deren Permeabilität weniger als $10^{-20}$ m$^2$ beträgt und damit mindestens die untere Grenze von natürlichem Steinsalz erreicht. In Laborversuchen wurde festgestellt, daß mit den vorgenannten Versatzmaterialien zur Durchführung des erfindungsgemäßen Verfahrens sogar Lösungen abgeblockt werden können, die unter einem Druck von 20 MPa stehen.

| ANHANG | | |
|---|---|---|
| **Minerale:** | | |
| Formel | Chem. Name | Mineralname |
| NaCl | Natriumchlorid | Halit |
| KCl | Kaliumchlorid | Sylvin |
| $MgSO_4$ | Magnesiumsulfat (wasserfrei) | Magnesiumsulfat |
| $CaCl_2$ | Calciumchlorid (wasserfrei) | Calciumchlorid |
| $CaSO_4$ | Calciumsulfat (wasserfrei) | Anhydrit |
| $K_2SO_4$ | Kaliumsulfat (wasserfrei) | Arkanit |
| $Na_2SO_4$ | Natriumsulfat (wasserfrei) | Thenardit |
| $MgSO_4 * H_2O$ | | Kieserit |
| $MgSO_4 * 4 H_2O$ | | Leonhardit (Starkeyit) |
| $MgSO_4 * 5 H_2O$ | | Pentahydrit |
| $MgSO_4 * 6 H_2O$ | | Hexahydrit |
| $MgSO_4 * 7 H_2O$ | | Epsomit |
| $MgCl_2 * 6H_2O$ | | Bischofit |
| $KMgCl_3 * 6H_2O$ | | Carnallit |
| $KMgClSO_4 * 2,75 H_2O$ | | Kainit |
| $Na_2Mg(SO_4)_2 * 4H_2O$ | | Blödit |
| $Na_{21}MgCl_3(SO_4)_{10}$ | | D' Ansit |
| $K_2Ca(SO_4)_2 * H_2O$ | | Syngenit |
| $Na_2Ca(SO_4)_2$ | | Glauberit |
| $K_2MgCa_2(SO_4)_4 * 2H_2O$ | | Polyhalit |
| $CaSO_4 * 0,5 H_2O$ | | Bassanit (Halbhydrat) |
| **Gesteine:** | | |
| Steinsalz | Gemenge aus Halit und Anhydrit | |
| Carnallitit | Gemenge aus Carnallit, Kieserit und Halit | |
| Hartsalz | Gemenge aus Sylvin, Kieserit und Halit | |
| Kainitit | Gemenge aus Kainit und Halit | |

**Patentansprüche**

1.   Verfahren zum Verhindern des Eindringens einer Salzlösung in einen mit mindestens einer Öffnung versehenen Hohlraum einer Salzlagerstätte, bei dem in die mindestens eine Öffnung poröses Versatzmaterial gefüllt wird,

wobei das Versatzmaterial einen kristallwasserarmen oder kristallwasserfreien Reaktanden enthält, der bei Zutritt einer Salzlösung durch Mineralum- bzw. -neubildung unter Volumenzunahme reagiert,

wobei pro Volumeneinheit des Versatzmaterials der in ihm nach dem Einbringen und vor der Reaktion verbliebene Porenraum kleiner als die maximal hervorrufbare Volumenzunahme ist,

**dadurch gekennzeichnet, daß** der kristallwasserarme oder kristallwasserfreie Reaktand

$MgSO_4$ und/oder $K_2SO_4$ und/oder $Na_2SO_4$ und/oder KCl und/oder $CaCl_2$ und/oder Kieserit und/oder Hartsalz und/oder Carnallitit und/oder ein Entwässerungsprodukt von Kieserit und/oder ein Entwässerungsprodukt von Hartsalz und/oder ein Entwässerungsprodukt von Kainitit und/oder ein Entwässerungsprodukt von Carnallitit und/oder ein weiteres ähnliches Salz ist,

und/oder mineralische Rückstände aus Verbrennungsprozessen oder Rauchgasreinigung und/oder mineralische Rückstände aus Produktionsprozessen, die einen oder mehrere der vorgenannten Stoffe bzw. ähnliche Stoffe enthalten, umfaßt.

2. Verfahren nach Anspruch 1, **dadurch gekennzeichnet, daß** das Versatzmaterial vorkompaktiert eingebracht wird, um den in ihm verbliebenen Porenraum zu reduzieren.

3. Verfahren nach Anspruch 1 oder 2, **dadurch gekennzeichnet, daß** die mindestens eine mit Versatzmaterial gefüllte Öffnung zur sofortigen Bildung eines Stopfens mit Salzlösung kontrolliert geflutet wird.

4. Verfahren nach einem der vorhergehenden Ansprüche, **dadurch gekennzeichnet, daß** das Versatzmaterial mindestens zwei der Reaktanden enthält.

5. Verfahren nach einem der vorhergehenden Ansprüche, **dadurch gekennzeichnet, daß** das Versatzmaterial zusätzlich mindestens einen inerten Stoff enthält.

6. Verfahren nach einem der vorhergehenden Ansprüche, **dadurch gekennzeichnet, daß** bei mindestens einer Öffnung abschnittsweise Versatzmaterial unterschiedlicher Zusammensetzung eingebracht wird.

7. Verfahren nach einem der vorhergehenden Ansprüche, **dadurch gekennzeichnet, daß** auf der Seite des Zutritts der Salzlösung zusätzlich eine Strömungsbarriere mit definierter Permeabilität vorgesehen wird.

8. Verfahren nach einem der vorhergehenden Ansprüche, **dadurch gekennzeichnet, daß** sich ein Schadstoff in dem Hohlraum befindet und das Versatzmaterial den Schadstoff ganz oder teilweise umschließend in den Hohlraum und dessen mindestens eine Öffnung eingebracht wird.

9. Verwendung eines Verfahrens gemäß einem der Ansprüche 1 bis 8 zum Einschließen eines Schadstoffes in einem Deponieraum einer Salzlagerstätte.

**Claims**

1. A method of preventing the penetration of a salt solution into a cavity, which is provided with at least one opening, of a salt deposit, in which porous packing material is filled into the at least one opening,

wherein the packing material contains a reactant which is free from or has a low content of water of crystallisation and which upon the admission of a salt solution reacts by mineral transformation or reformation with an increase in volume,

wherein per unit of volume of the packing material the pore space which has remained therein after introduction and prior to the reaction is smaller than the maximum increase in volume which can be produced,

**characterised in that** the reactant which is free from or has a low content of water of crystallisation is

$MgSO_4$ and/or $K_2SO_4$ and/or $Na_2SO_4$ and/or KCl and/or $CaCl_2$ and/or kieserite and/or hard salt and/or carnallite and/or a dehydration product of kieserite and/or a dehydration product of hard salt and/or a dehydration product of kainite and/or a dehydration product of carnallite and/or a further similar salt,

and/or mineral residues from combustion processes or flue gas purification and/or mineral residues from production processes which contain one or more of the aforementioned substances or similar substances.

2. A method according to claim 1 **characterised in that** the packing material is introduced in a pre-compacted condition in order to reduce the pore space remaining therein.

3. A method according to claim 1 or claim 2 **characterised in that** the at least one opening filled with packing material is flooded in a control fashion with salt solution for immediately forming a plug.

4. A method according to one of the preceding claims **characterised in that** the packing material contains at least two of the reactants.

5. A method according to one of the preceding claims **characterised in that** the packing material additionally contains at least one inert substance.

6. A method according to one of the preceding claims **characterised in that** in the case of at least one opening packing material of differing composition is introduced in a portion-wise manner.

7. A method according to one of the preceding claims **characterised in that** a flow barrier of defined permeability is additionally provided on the side of the entry of the salt solution.

8. A method according to one of the preceding claims **characterised in that** there is a pollutant in the cavity and the packing material is introduced into the cavity and the at least one opening thereof, entirely or partially enclosing the pollutant.

9. Use of a method according to one of claims 1 to 8 for enclosing a pollutant in a dump space of a salt deposit.


**Revendications**

1. Procédé pour empêcher la pénétration d'une solution saline dans une cavité présentant au moins une ouverture, d'un gisement de sel, dans lequel un matériau poreux de remblai est chargé dans l'ouverture ou les ouvertures,
   le matériau de remblai contenant un corps réactionnel renfermant peu ou pas d'eau de cristallisation, qui réagit avec augmentation de volume à l'entrée d'une solution saline par transformation ou formation nouvelle de matière minérale,
   la porosité restant dans le matériau de remblai, par unité de volume de ce matériau, après la pénétration et avant la réaction étant inférieure à l'augmentation de volume maximale pouvant être engendrée,
   **caractérisé en ce que** le corps réactionnel contenant peu ou pas d'eau de cristallisation est
   $MgSO_4$ et/ou $K_2SO_4$ et/ou $Na_2SO_4$ et/ou KCl et/ou $CaCl_2$ et/ou la kiesérite et/ou le sel dur et/ou la carnallitite et/ou un produit de déshydratation de la kiesérite et/ou un produit de déshydratation du sel dur et/ou un produit de déshydratation de la kaïnite et/ou un produit de déshydratation de la carnallitite et/ou un autre sel similaire,
   et/ou comprend des résidus minéraux d'opérations de combustion ou d'épuration de gaz de fumée et/ou des résidus minéraux d'opérations industrielles de production, qui contiennent une ou plusieurs des substances mentionnées ci-dessus ou des substances similaires.

2. Procédé suivant la revendication 1, **caractérisé en ce que** le matériau de remblai est utilisé à l'état précompacté afin de réduire son volume résiduel des pores.

3. Procédé suivant la revendication 1 ou 2, **caractérisé en ce que** l'ouverture ou les ouvertures remplies de matériau de remblai sont noyées de façon contrôlée en vue de la formation immédiate d'un bouchon de solution saline.

4. Procédé suivant l'une des revendications précédentes, **caractérisé en ce que** le matériau de remblai contient au moins deux des corps réactionnels.

5. Procédé suivant l'une des revendications précédentes, **caractérisé en ce que** le matériau de remblai contient en outre au moins une substance inerte.

6. Procédé suivant l'une des revendications précédentes, **caractérisé en ce que**, dans le cas d'au moins une ouverture, du matériau de remblai de compositions variées est introduit par tronçons.

7. Procédé suivant l'une des revendications précédentes, **caractérisé en ce qu'**une barrière d'écoulement de perméabilité définie est prévue en outre du côté de l'entrée de la solution saline.

8. Procédé suivant l'une des revendications précédentes, **caractérisé en ce qu'**une substance nocive se trouve dans la cavité et le matériau de remblai entoure totalement ou partiellement la substance nocive lorsqu'il est introduit dans la cavité et par son ouverture ou ses ouvertures.

9.  Utilisation d'un procédé suivant l'une des revendications 1 à 8 pour le confinement d'une substance nocive dans un dépôt de déchets d'un gisement de sel.